# EUROPÄISCHE PATENTSCHRIFT

(11) **EP 2 449 400 B1**
(45) Veröffentlichungstag und Bekanntmachung des Hinweises auf die Patenterteilung: **19.06.2013**
(21) Anmeldenummer: 10717638.0
(22) Anmeldetag: 30.04.2010
(51) Int. Cl.: G01S 7/03, H03D 1/22, H03D 3/00, H03D 7/16

(54) **MISCHERBAUGRUPPE UND RADARSENSOR FÜR KRAFTFAHRZEUGE**
MIXER ASSEMBLY AND RADAR SENSOR FOR MOTOR VEHICLES
MODULE MÉLANGEUR ET DÉTECTEUR RADAR POUR VÉHICULES AUTOMOBILES

(30) Priorität: 30.06.2009 DE 102009027327
(43) Veröffentlichungstag der Anmeldung: 09.05.2012
(73) Patentinhaber: Robert Bosch GmbH, 70442 Stuttgart (DE)
(72) Erfinder: STEINBUCH, Dirk, 71299 Wimsheim (DE)
(86) Internationale Anmeldenummer: PCT/EP2010/055892
(87) Internationale Veröffentlichungsnummer: WO 2011/000600

(56) Entgegenhaltungen:
- EP-A2- 1 193 858
- DE-A1- 3 644 392

## Beschreibung

### Stand der Technik

Die Erfindung betrifft eine Mischerbaugruppe für einen Radarsensor für Kraftfahrzeuge, mit einem I-Mischer und einem Q-Mischer, die mittels Leistungsteilern in parallelen Zweigen zwischen einen Oszillatorport und einen RF-Port geschaltet sind.

In einem Radarsensor für Kraftfahrzeuge, der beispielsweise zur Ortung vorausfahrender Fahrzeuge und zur Abstands- und Geschwindigkeitsmessung dient, beispielsweise einem FMCW-Radar (Frequency Modulated Continuos Wave), enthält jeder Kanal mindestens einen Mischer, der das von der Radarantenne empfangene Hochfrequenzsignal (RF-Signal) mit einem über den Oszillatorport zugeführten Signal eines lokalen Oszillators mischt, um als Ausgangssignal ein Zwischenfrequenzsignal zu erzeugen, dessen Frequenz der Differenz zwischen der Frequenz des gesendeten Oszillatorsignals und der Frequenz des empfangenen RF-Signals entspricht. Bei neueren Radarsensoren werden diese Mischer durch integrierte Bauelemente auf Silizium-Germanium-Basis gebildet, beispielsweise durch sogenannte MMICs (Microwave Monolithic Integrated Circuits).

Man unterscheidet generell zwischen I/Q-Mischern, bei denen an einem I-Ausgang der Realteil des heruntergemischten Signals und an einem Q-Ausgang der Imaginärteil dieses Signals (Quadratur) abgegriffen werden kann, und sogenannten In-Phase-Mischern, bei denen nur der Realteil abgegriffen werden kann. In Radarsensoren für Kraftfahrzeuge werden bisher vorwiegend In-Phase-Mischer eingesetzt.

I-Q-Mischer haben zwar den Vorteil, das sie eine höhere Signalgüte aufweisen und bei bestimmten Anwendungen eine Reduzierung der erforderlichen Rechenleistung im nachgeschalteten Auswertungspfad ermöglichen, haben jedoch andererseits den Nachteil, daß sie eine Verdopplung der Auswertekette erfordern, so daß erhöhte Kosten für zusätzliche Anschlußpads auf dem Chip, Bondübergänge, Vorverstärker, A/D-Wandler und dergleichen entstehen.

EP 1 193 858 A2 beschreibt eine Mischerbaugruppe mit der Möglichkeit, als Ausgangssignal entweder das In-Phase Signal oder ein Hüllkurvensignal zu wählen.

DE 36 44 392 A1 beschreibt eine Mischerbaugruppe, die entweder als I-Q-Detektor oder als Abwärtsmischer betrieben werden kann.

### Offenbarung der Erfindung

Aufgabe der Erfindung ist es, eine Mischerbaugruppe zu schaffen, mit der sich Radarsensoren mit I/Q-Mischern in kostengünstiger Weise realisieren lassen.

Diese Aufgabe wird erfindungsgemäß dadurch gelöst, daß zwischen jedem der Leistungsteiler und dem Q-Mischer ein Schalter angeordnet ist, mit dem das vom Leistungsteiler kommende Signal wahlweise vom Q-Mischer abkoppelbar und auf eine Hochfrequenzmasse schaltbar ist, und daß zwischen den Hochfrequenzmassen und dem jeweiligen Knotenpunkt des Leistungsteilers ein Transformationsglied vorgesehen ist, das die Hochfrequenzmasse in eine offene Leitung am Knotenpunkt transformiert.

Diese Mischerbaugruppe hat den Vorteil, daß sie nach Bedarf zwischen I/Q-Betrieb und reinem In-Phase-Betrieb umschaltbar ist, ohne daß im In-Phase-Betrieb unerwünschte Leistungsverluste oder Fehlanpassungen auftreten. Im I/Q-Betrieb ist der Q-Mischer durch die elektronischen Schalter mit den Leistungsteilern und folglich mit dem Oszillatorport und dem RF-Port verbunden, und die Spannungsversorgungen für beide Mischer sind eingeschaltet, so daß beide Mischer aktiv sind. Die Baugruppe ist dabei so ausgelegt, daß das System in diesem Zustand angepaßt ist. Im In-Phase-Betrieb ist die Spannungsversorgung für den Q-Mischer abgeschaltet, und mit Hilfe der elektronischen Schalter wird der Q-Mischer von den Leistungsteilern getrennt, so daß durch den Q-Mischer keine Leistungsverluste verursacht werden. Die Transformationsglieder sorgen dafür, daß das System auch in diesem Zustand wieder angepaßt ist, da die Signale so transformiert werden, daß die Hochfrequenzmassen wie offene Leitungen an den Knotenpunkten der Leistungsteiler wirken und somit die Hochfrequenzmassen keine unerwünschten Reflexionen verursachen. Auf diese Weise läßt sich in beiden Betriebsarten eine optimale Anpassung erreichen, so daß keine unerwünschten Störsignale oder Leistungsverluste auftreten.

Die Erfindung schafft so eine universell einsetzbare Mischerbaugruppe, die je nach Bedarf als I/Q-Mischer oder In-Phase-Mischer betrieben werden kann. Auf diese Weise lassen sich Kosteneinsparungen durch Massenfertigung der Mischerbaugruppen in größere Stückzahlen erreichen. Beispielsweise ist es bei einem winkelauflösenden Radarsensor mit mehreren Sende- und Empfangskanälen oft aus Kostengrünen vorteilhaft, wenn nur einige dieser Kanäle mit I/Q-Mischern ausgestattet sind, um eine aussagekräftigere Signalauswertung zu erreichen, während andere Kanäle desselben Sensors nur für den Betrieb als In-Phase-Mischer ausgelegt sind, so daß hier die höheren Kosten für zusätzliche Auswertungspfade eingespart werden können. Die Erfindung erlaubt es dann, in rationeller und kostengünstiger Weise sämtliche Kanäle mit identischen Mischerbaugruppen auszustatten und diese dann durch entsprechende Wahl der Schalterstellungen die jeweils gewünschte Betriebsart zu konfigurieren.

Gegenstand der Erfindung ist somit auch ein Radarsensor für Kraftfahrzeuge, der mehrere Empfangskanäle aufweist und in jedem Empfangskanal eine gemäß der Erfindung ausgebildete Mischerbaugruppe enthält.

Vorteilhafte Ausgestaltungen und Weiterbildungen der Erfindung sind in den Unteransprüchen angegeben.

Bevorzugt wird die Mischerbaugruppe durch ein MMIC gebildet, wobei auch mehrere Mischerbaugruppen, z. B. für mehrere Kanäle des Radarsensors, auf einem einzigen MMIC-Chip integriert sein können.

Die Schalter in der Mischerbaugruppe können als mechanische Schaltglieder oder als elektronische Schalter ausgebildet sein. Bei den Transformationsgliedern handelt es sich vorzugsweise um λ/4-Leitungen.

Im folgenden wird ein Ausführungsbeispiel anhand der Zeichnung näher erläutert.

Es zeigen:
- Fig. 1: eine Prinzipskizze einer erfindungsgemäßen Mischerbaugruppe; und
- Fig 2: eine Prinzipskizze eines Radarsensors mit Mischerbaugruppen gemäß Fig. 1.

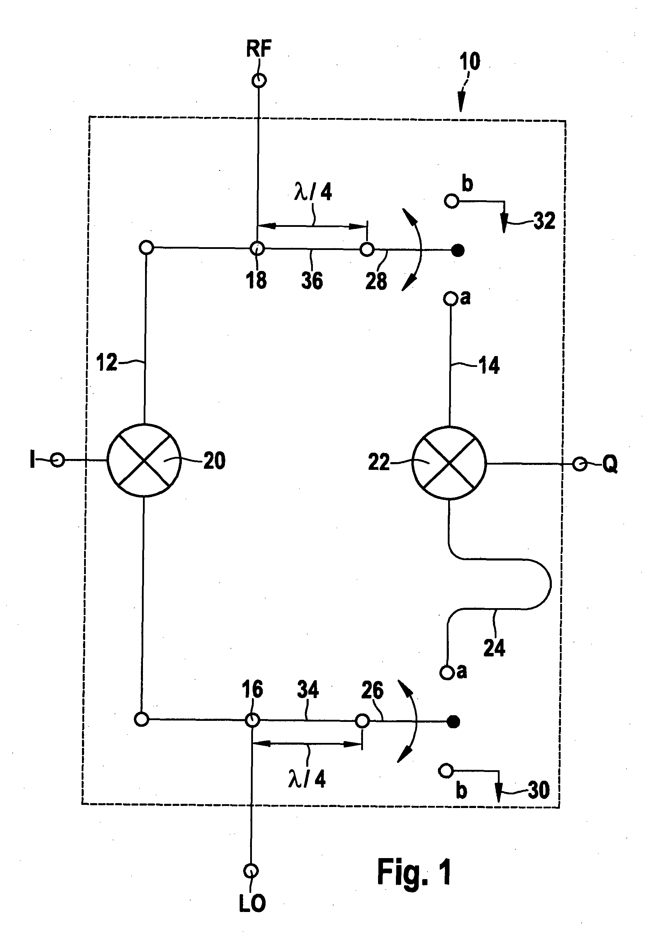

In Fig. 1 ist ein Schaltbild einer Mischerbaugruppe 10 dargestellt, die beispielsweise durch einen MMIC-Chip gebildet wird. Über einen Oszillatorport LO wird der Mischerbaugruppe ein hochfrequentes Signal eines hier nicht gezeigten lokalen Oszillators zugeführt. Über einen RF-Port RF wird der Mischerbaugruppe ein Hochfrequenzsignal (RF-Signal) zugeführt, das von einer in Fig. 1 nicht dargestellten Antenne des Radarsensors empfangen wird. Das über den Oszillatorport LO zugeführte Signal hat die gleiche Frequenz wie das Radarsignal, das vom Radarsensor gesendet wird. Im Falle eines monostatischen Antennenkonzepts wird das von dem lokalen Oszillator erzeugte Signal direkt als Sendesignal an die Antenne weitergeleitet, über die auch das RF-Signal empfangen wird. In diesem Fall kann die Mischerbaugruppe 10 als Transfermischer arbeiten, der einen Teil des Oszillatorsignals zum RF-Port weiterleitet, während ein anderer Teil dieses Signals mit dem von der Antenne empfangenen Signal gemischt wird.

Die Mischerbaugruppe 10 weist zwei parallele Zweige 12, 14 auf, die über jeweilige Leistungsteiler 16, 18, hier nur als einfache Knotenpunkte dargestellt, mit dem Oszillatorport LO und dem RF-Port verbunden sind. Der Zweig 12 enthält einen Mischer, der hier als I-Mischer 20 bezeichnet wird und dazu dient, die über die Leistungsverteiler 16 und 18 eintreffenden Signale miteinander zu mischen und den Realteil des Mischprodukts an einem Ausgang I auszugeben. Der Zweig 14 enthält einen Q-Mischer 22, der ebenfalls die von den Leistungsteilern 16, 18 zugeführten Signale mischt, jedoch das Signal vom Leistungsteiler 16 über eine 90°-Umwegleitung 24 erhält, also mit einer um 90° verschobenen Phase. Das an einem Ausgang Q dieses Mischers ausgegebene Signal repräsentiert deshalb den Imaginärteil des Mischprodukts.

Im Pfad 14 ist zwischen dem Leistungsteiler 16 und der Umwegleitung 24 ein Schalter 26 und zwischen dem Q-Mischer 22 und dem Leistungsteiler 18 ein Schalter 28 angeordnet. Wenn sich beide Schalter 26 und 28 in der jeweiligen Schaltstellung "a" befinden, ist der Pfad 14 geschlossen. Wenn die Versorgungsspannung (nicht gezeigt) sowohl für den I-Mischer 20 als auch für den Q-Mischer 22 eingeschaltet ist, arbeitet die Mischerbaugruppe somit als I/Q-Mischer. Die Pfade 12, 14 sind dabei so ausgelegt, daß die Mischerbaugruppe dieser Betriebsart optimal angepaßt ist.

Wenn die Mischerbaugruppe 10 als reiner In-Phase-Mischer betrieben werden soll, wird die Spannungsversorgung für den Q-Mischer 22 abgeschaltet, und die Schalter 26, 28 werden in die jeweilige Schaltstellung "b" gebracht, so daß der Q-Mischer 22 von den Leistungsteilern 16 und 18 abgekoppelt ist. Die Leistungsteiler sind dann jeweils auf eine Hochfrequenzmasse 30 bzw. 32 geschaltet. Auf diese Weise wird verhindert, daß der nicht aktive Q-Mischer 22 unerwünschte Leistungsverluste verursacht.

Um auch in der Schaltstellung "b" der beiden Schalter 26, 28 eine Fehlanpassung der Mischerbaugruppe zu vermeiden, ist die Hochfrequenzmasse 30 mit dem Leistungsteiller 16 über ein Transformationsglied 34 verbunden, und entsprechend ist die Hochfrequenzmasse 32 mit dem Leistungsteiler 18 über ein Transformationsglied 36 verbunden. Im gezeigten Beispiel werden die Transformationsglieder durch λ/4-Leitungen zwischen dem Schalter und dem Knotenpunkt des jeweiligen Leistungsteilers gebildet (die Abmessungen der Schalter 26, 28 sind in der Zeichnung übertrieben dargestellt). Die Transformationsglieder 34, 36 bewirken, daß die zu den Hochfrequenzmassen laufenden Signale und die an diesen Massen reflektierten Signale sich an den Knotenpunkten der Leistungsteiler 16, 18 durch Interferenz auslöschen, so daß die Hochfrequenzmassen wie offene Leitungsenden an dem jeweiligen Knotenpunkt wirken. Auf diese Weise wird auch im In-Phase-Betrieb die Anpassung des Systems gewährleistet und somit die Entstehung von Störsignalen vermieden, die andernfalls zu einer Übersteuerung der Mischer durch hohe DC-Offsets führen würden.

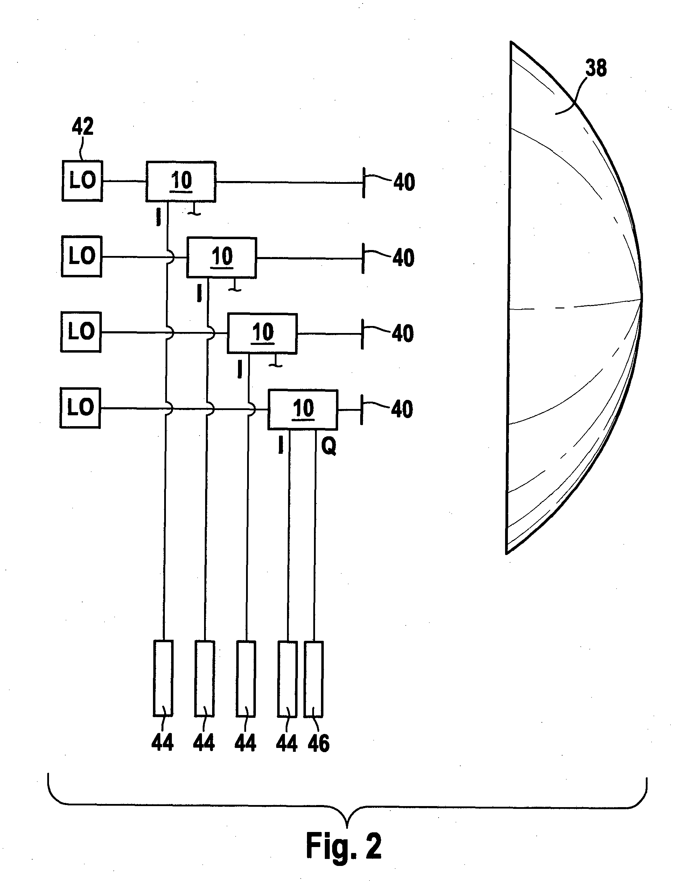

In Fig. 2 ist eine schematische Darstellung eines Radarsensors mit vier Sende- und Empfangskanälen, die jeweils eine Mischerbaugruppe 10 gemäß Fig. 1 enthalten. Der Radarsensor weist eine Radarlinse 38 auf, vor der in geeignetem Abstand vier Antennenpatches 40 angeordnet sind. Die Antennenpatches 40 dienen als Sende- und Empfangsantennen und sind in der Horizontalen gegeneinander versetzt, so daß vier Radarkeulen in leicht unterschiedlichen Azimutwinkeln abgestrahlt werden. Jedes Antennenpatch 40 ist über eine der Mischerbaugruppen 10 mit einem lokalen Oszillator 42 verbunden. Die I-Ausgänge aller vier Mischerbaugruppen 10 sind mit jeweiligen Auswertungspfaden 44 verbunden. Bei den drei oberen Mischerbaugruppen in Fig. 2 liegen die Q-Ausgänge brach. Nur bei der unteren Mischerbaugruppe 10 ist der Q-Ausgang mit einem zusätzlichen Auswertungspfad 46 zur Auswertung des Imaginärteils des Mischprodukts verbunden.

Der hier gezeigte Radarsensor weist somit vier Kanäle auf, je einen für jedes Antennenpatch 40, und alle vier Kanäle enthalten identische Mischerbaugruppen 10, was eine kostengünstige Massenfertigung der Mischerbaugruppen ermöglicht. In der hier gezeigten Konfiguration arbeiten jedoch drei der vier Mischerbaugruppen 10 im In-Phase-Betrieb und nur eine arbeitet als I/Q-Mischer.

## Patentansprüche

1. Mischerbaugruppe (10) für einen Radarsensor für Kraftfahrzeuge, mit einem I-Mischer (20) und einem Q-Mischer (22), die mittels Leistungsteilern (16, 18) in parallelen Zweigen (12, 14) zwischen einen Oszillatorport (LO) und einen RF-Port (RF) geschaltet sind, **dadurch gekennzeichnet, daß** zwischen jedem der Leistungsteiler (16, 18) und dem Q-Mischer (22) ein Schalter (26, 28) angeordnet ist, mit dem das vom Leistungsteiler kommende Signal wahlweise vom Q-Mischer (22) abkoppelbar und auf eine Hochfrequenzmasse (30, 32) schaltbar ist, und daß zwischen dem jeweiligen schalter (26, 28) und dem jeweiligen Leistungsteiler (16, 18) ein Transformationsglied (34, 36) vorgesehen ist, das die Hochfrequenzmasse in eine offene Leitung am jeweiligen Leistungsteiler transformiert.

2. Mischerbaugruppe nach Anspruch 1 in der Form eines MMIC.

3. Mischerbaugruppe nach Anspruch 1 oder 2, bei der die Transformationsglieder (34, 36) λ/4-Leitungen sind.

4. Radarsensor für Kraftfahrzeuge, mit mehreren Empfangskanälen, die jeweils eine Mischerbaugruppe (10) nach einem der Ansprüche 1 bis 3 enthalten.

## Claims

1. Mixer assembly (10) for a radar sensor for motor vehicles, having an I mixer (20) and a Q mixer (22) which are connected in parallel branches (12, 14) between an oscillator port (LO) and an RF port (RF) by means of power splitters (16, 18), **characterized in that** a switch (26, 28) is arranged between each of the power splitters (16, 18) and the Q mixer (22) and can be used to selectively uncouple the signal coming from the power splitter from the Q mixer (22) and to connect said signal to a high-frequency earth (30, 32), and **in that** a transformation element (34, 36) is provided between the respective switch (26, 28) and the respective power splitter (16, 18) and transforms the high-frequency earth into an open line at the respective power splitter.

2. Mixer assembly according to Claim 1 in the form of an MMIC.

3. Mixer assembly according to Claim 1 or 2, in which the transformation elements (34, 36) are λ/4 lines.

4. Radar sensor for motor vehicles, having a plurality of reception channels each containing a mixer assembly (10) according to one of Claims 1 to 3.

## Revendications

1. Module mélangeur (10) pour détecteur radar de véhicule automobile, présentant un mélangeur I (20) et un mélangeur Q (22) raccordés par d'intermédiaire de diviseurs de puissance (16, 18) dans des branches parallèles (12, 14) situées entre un port d'oscillateur (LO) et un port RF (RF),
**caractérisé en ce que**
un commutateur (26, 28) par lequel le signal provenant du diviseur de tension peut être émis sélectivement par le mélangeur Q (22) et commuté sur une masse (30, 32) à haute fréquence est disposé entre chacun des diviseurs de puissance (16, 18) et le mélangeur Q (22) et
**en ce qu'**un organe de transformation (34, 36) qui transforme la masse à haute fréquence en un conducteur ouvert est prévu entre chaque commutateur (26, 28) et chaque diviseur de puissance (16, 18).

2. Module mélangeur selon la revendication 1, qui présente la forme d'un MMIC.

3. Module mélangeur selon les revendications 1 ou 2, dans lequel les organes de transformation (34, 36) sont des conducteurs λ/4.

4. Détecteur radar pour véhicule automobile, présentant plusieurs canaux de réception qui contiennent chacun un module mélangeur (10) selon l'une des revendications 1 à 3.
